# EUROPÄISCHE PATENTANMELDUNG

(11) **EP 2 471 487 A1**
(43) Veröffentlichungstag der Anmeldung: **04.07.2012**
(21) Anmeldenummer: 11192448.6
(22) Anmeldetag: 07.12.2011
(51) Int. Cl.: A61C 13/20

(54) **Verfahren zur Herstellung von zahnprothetischen Formkörpern und Muffelsystem dafür**

(30) Priorität: 29.12.2010 DE 102010061609
(71) Anmelder: bredent GmbH & Co. KG, 89250 Senden (DE)
(72) Erfinder: Böhm, Wilfried, 89250 Senden (DE); Sedlatschek, Karl, 89264 Weißenhorn (DE)
(74) Vertreter: Weber, Gerhard

(57) **Zusammenfassung**

Zur Herstellung von zahnprothetischen Formkörpern durch Einpressen von Prothesenmaterial in einen oder mehrere Hohlräume einer Muffel wird vorgeschlagen, die auf bekannte Art vorbereitete Muffel in einen gegenüber der Muffel größeren Aufnahmeraum einer formstabilen, insbesondere metallischen Muffelaufnahme einzusetzen und einen zwischen Muffel und Innenwand des Aufnahmeraums gegebenen Zwischenraum mit einem fließfähigen, aushärtenden Füllmaterial auszufüllen. Als Füllmaterial wird vorzugsweise ein expandierend aushärtendes Material, insbesondere Gips, dessen Volumenexpansion dazu führt, dass eventuell an der Außenseite der Muffel vorhandene Risse aufgefüllt und/oder ein Ummanteln der Muffel unter Druckvorspannung erfolgt. Die von dem ausgehärteten Füllmaterial umgebene und in der formstabilen Muffelaufnahme befindliche Muffel wird in ein Pressgerät eingesetzt und die Hohlräume der Muffel werden unter Druck mit Prothesenmaterial insbesondere thermoplastischem Kunststoff gefüllt, wobei durch die Ummantelung und den Einsatz in der Muffelaufnahme eine Beschädigung der Muffel mit entsprechenden Fehlern der Formkörper während des Pressvorgangs zuverlässig vermieden wird.

## Beschreibung

Die Erfindung betrifft ein Verfahren zur Herstellung von zahnprothetischen Formkörpern und ein dafür geeignetes Muffelsystem.

Zur Herstellung von zahnprothetischen Formkörpern sind Muffelsysteme gebräuchlich, bei welchen in einer Muffelform Wachsmodelle der zahnprothetischen Körper von einer aushärtbaren Einbettmasse umflossen werden. Nach Aushärten der Einbettmasse, welche typischerweise Gips ist, wird das Wachs bei erhöhter Temperatur entfernt, so dass eine Muffel mit einem oder mehreren, Negativformen für die zu erzeugenden Formkörper bildenden Hohlräumen entsteht. Mittels eines Pressgeräts wird Prothesenmaterial, welches beispielsweise ein thermoplastischer Kunststoff sein kann durch einen Presskanal in den Hohlraum gedrückt. Ein Verfahren zur Herstellung von Dentalformteilen mittels einer Muffel ist beispielsweise in der DE 101 36 584 A1 beschrieben. Die Herstellung von Muffeln mittels teilbarer Manschetten ist z. B. in der DE 20 2005 003 014 U1 oder der DE 100 49 266 A1 beschrieben.

Die EP 0 806 188 A2 zeigt eine teilbare Muffel mit Mitteln zum Absperren der Negativform nach deren Befüllen mit unter Druck stehendem Kunststoffmaterial. Eine teilbare Muffel, welche mit flüssigem Metall befüllbar und in einer Halterung durch Schrauben zentrierbar ist, ist auch aus der US 2 260 909 A bekannt.

Um während des Pressvorgangs die Muffel gegen den Innendruck zu stabilisieren, ist in dem Thermopress 400 Muffelsystem der Firma bredent GmbH & Co. KG vorgesehen, die Muffel mit einer Metallmanschette, welche über Schrauben gegen den Außenmantel der Muffel gespannt wird, zu umgeben. Aus der DE 103 27 892 B3 ist es bekannt, ein wiederverwendbares metallisches Stützteil bei der Herstellung der Muffel in diese einzubetten. Es zeigt sich, dass mit dem bekannten Muffelsystem Schäden an der Muffel und daraus resultierende Fehler an den Formkörpern nicht hinreichend zuverlässig vermeidbar sind.

Der vorliegenden Erfindung liegt die Aufgabe zugrunde, ein Verfahren zur Herstellung von zahnprothetischen Formkörpern sowie ein dafür geeignetes Muffelsytem anzugeben, welches bei einfacher Handhabung die Gefahr von Fehlern an den Formkörpern verringert.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Durch die Einbettung der bereits ausgehärteten Muffel in eine fließfähige, aushärtbare Füllmasse in einer formstabilen Muffelaufnahme erfolgt vorteilhafterweise eine besonders gleichmäßige und großflächige seitliche Abstützung der Mantelfläche der Muffel gegen den während des Pressvorgangs auftretenden Innendruck in der Negativform der Muffel. Vorzugsweise zeigt die Füllmasse, die vorzugsweise bei Raumtemperatur fließfähig ist und chemisch aushärtet und die insbesondere Gips sein kann, beim Aushärten eine Volumenexpansion, wodurch sich die Füllmasse großflächig eng an die Außenfläche der Muffel anliegt und insbesondere auch an die Muffelaußenseite reichende Risse teilweise ausfüllen kann. Die Volumenexpansion kann ferner vorteilhafterweise zu einer elastischen Vorspannung des Füllmaterials und der Muffel führen. Die Muffelaufnahme sei als für alle im regulären Einsatz auftretenden Belastungen ausreichend stabil angegeben und kann insbesondere aus Metall bestehen.

Die Muffelaufnahme ist in vorteilhafter Ausführung topfförmig ausgeführt, wobei die Öffnung des Presskanals der Muffel vorzugsweise in der die Topföffnung abschließenden Fläche der Muffel liegt. Der Topfboden kann in bevorzugter Ausführung eine lösbare Bodenplatte aufweisen, welche vorteilhaft nach Abschluss des Pressvorgangs zum Auswerfen der Muffel und der Füllmasse aus der Muffelaufnahme in Richtung der Topföffnung der topfförmigen Muffelaufnahme dienen kann.

Es zeigt sich, dass mit dem erfindungsgemäßen Verfahren Fehler an den erzeugten Formkörpern, insbesondere Fehler in Form von Pressfahnen, welche durch Eindringen von Prothesenmaterial in Risse des Muffelmaterials entstehen, weitgehend vermieden werden können.

Die Erfindung ist nachfolgend anhand eines bevorzugten Ausführungsbeispiels unter Bezugnahme auf die Abbildungen noch eingehend veranschaulicht. Dabei zeigt:
- Fig. 1: die Herstellung einer Muffel im Querschnitt,
- Fig. 2: eine Muffelaufnahme mit weiteren Komponenten des Muffelsystems,
- Fig. 3: die Teile nach Fig. 2 in zusammen gebautem Zustand,
- Fig. 4: einen Schnitt durch Fig. 3,
- Fig. 5: die Entformung aus der Muffelaufnahme,
- Fig. 6: einen entformten Körper in Schrägansicht.

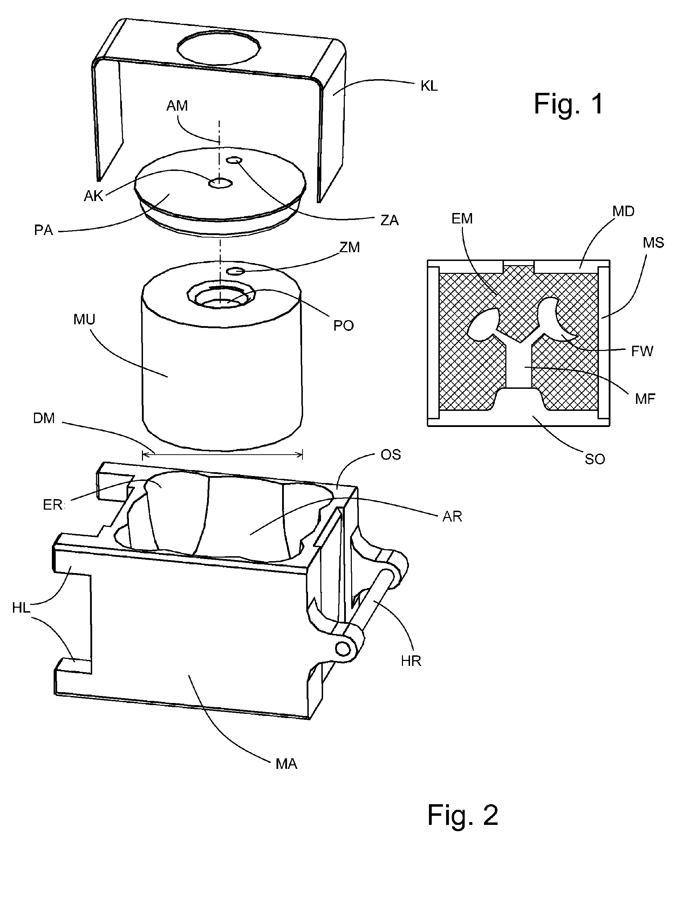

Fig. 1 zeigt eine an sich gebräuchliche Muffelform zur Herstellung einer Muffel für zahnprothetische Formkörper. Die Muffelform enthält eine Sockelplatte SO, von welcher ein Muffelformer MF absteht, an welchen über Wachsstifte Wachsmodelle FW von zahnprothetischen Formkörpern aufgewachst sind. Eine Manschette MS umgibt den Raum, in welchem die Wachsmodelle FW angeordnet sind. Der von der Manschette MS umgebene Raum kann nach oben durch einen Deckel MD abgeschlossen sein. Der von der Manschette MS seitlich begrenzte Raum um die Wachsmodelle wird vollständig mit einem Einbettmaterial EM in fließfähiger Form ausgefüllt und das Einbettmaterial EM, welches typischerweise Gips ist, wird ausgehärtet. Nach dem Aushärten des Einbettmaterials EM wird die Muffel aus der Muffelform entnommen und bei erhöhter Temperatur wird das Wachs von Wachsstiften und Wachsmodellen aus dem Einbettmaterial EM entfernt, so dass dort Hohlräume als Negativformen der Wachsmodelle bzw. der herzustellenden zahnprothetischen Formkörper entstehen. Als Einbettmaterial sind allgemein formstabil aushärtende und die selektive Entfernung der Modelle ermöglichende, insbesondere hitzebeständige Materialien, auch Mischungen z. B. aus Sand, Gips und ähnlichem einsetzbar. Die den herzustellenden Formkörpern entsprechenden Anteile der Hohlräume sind über einen durch den Muffelformer MF in der Einbettmasse erzeugten Presskanal sowie über die durch die Wachsstifte erzeugten Seitenkanäle zugänglich. Formen für die Herstellung von derartigen Muffeln sind in verschiedener Abwandlung gegenüber der in Fig. 1 gezeigten Ausführung bekannt und gebräuchlich, so dass nachfolgend von einer auf an sich bekannte Art erzeugbaren Muffel aus aushärtbarem Einbettmaterial, insbesondere aus Gips oder anderem hitzebeständigen Materialien ausgegangen wird.

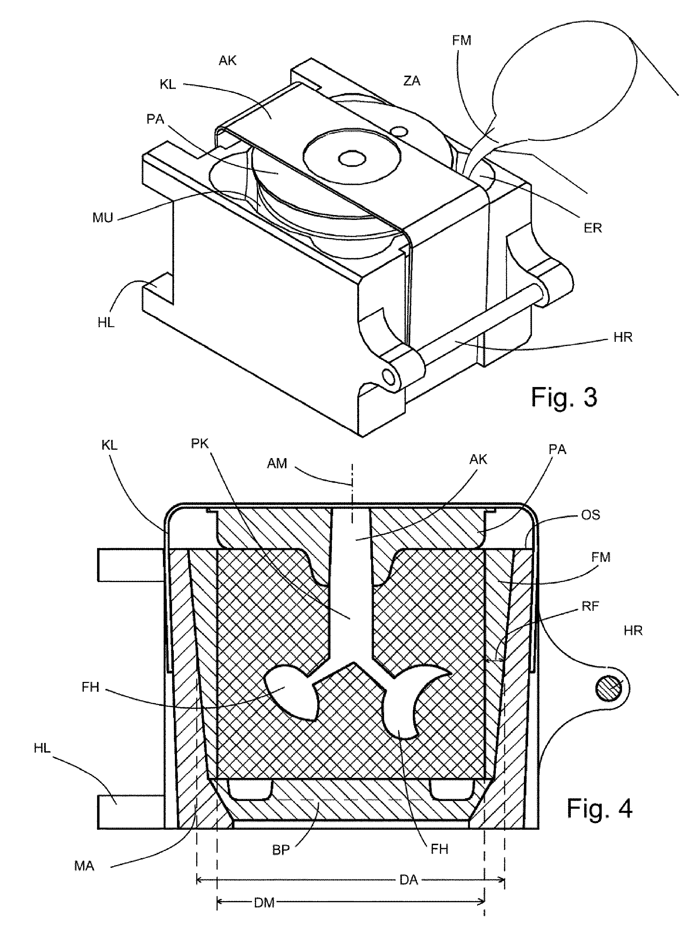

Fig. 2 zeigt in Schrägdarstellung eine Muffelaufnahme MA als wesentlichen Teil der vorliegenden Erfindung sowie eine Muffel MU, einen Pressgerät-Adapter PA und eine Klammer KL als weitere Komponenten in getrennter Darstellung, wobei die Muffel MU, der Adapter PA und die Klammer KL in Achsrichtung einer für die mehreren dargestellten Komponenten gemeinsamen Mittelachse AM zusammensetzbar sind. Fig. 3 zeigt die Komponenten nach Fig. 2 in zusammen gesetztem Zustand, in welchem die Muffel MU in die Muffelaufnahme eingesetzt ist. Dabei ist die Muffel MU in der Darstellung nach Fig. 2 und Fig. 3 gegenüber der Ausrichtung nach Fig. 1 um 180° gedreht, so dass die Öffnung PO des durch den Muschelformer MF erzeugten Presskanals zu dem Adapter PA hin weist.

Die Muffelaufnahme ist formstabil und umgibt mit der Innenwand des Aufnahmeraums AR die Muffel MU um die Mittelachse AM umlaufend, wobei die Muffel MU am Boden des Aufnahmeraums aufliegt und seitlich, d. h. in bezüglich der Mittelachse AM radialer Richtung, von der Innenwand des Aufnahmeraums beabstandet ist und zwischen Seitenfläche der Muffel MO und Innenwand IW des Aufnahmeraums AR ein umlaufender Zwischenraum entsteht. Der Aufnahmeraum AR besitze eine Grundgeometrie in Form eines sich von der Öffnungsseite OS der Muffelaufnahme weg verjüngenden Kreiskegelstumpfes. Zusätzlich sind von der Oberseite OS der Muffelaufnahme MA her Erweiterungen ER gegenüber der Kegelstumpfform ausgebildet, welche das Eingießen von Füllmaterial in den Zwischenraum zwischen den Seitenwänden des Aufnahmeraums AR und die in den Aufnahmeraum eingesetzte Muffel MU begünstigen.

Der Adapter PA greift mit seiner der Muffel MU zugewandten Seite in eine durch den Muffelformer bestimmte Vertiefung der Muffel ein und ist dadurch in bezüglich der Mittelachse AM radialer Richtung formschlüssig mit der Muffel MU verbunden. Zusätzlich können eine definierte Drehposition des Adapters bezüglich der Muffel um die Achse AM bestimmende Strukturen ZM an der Muffel und ZA am Adapter vorgesehen sein. Die Klammer KL liegt unter leichter Klemmung seitlich an Außenflächen der Muffelaufnahme an und hält die Muffel während des in Fig. 3 schematisch dargestellten Eingießens von Füllmaterial FM in den Zwischenraum in zumindest annähernd innerhalb des Aufnahmeraums zentrierter Position. Der Adapter PA ist mit seiner von der Muffel MU weg weisenden Seite auf ein Pressgerät abgestimmt und enthält insbesondere einen Adapterkanal AK für den Pressvorgang.

Die Muffelaufnahme zeigt in der dargestellten Außenform Haltestrukturen HR und HL, welche auf eine spezielle Form eines Pressgeräts abgestimmt sind und je nach Ausführung des Pressgeräts variieren können. Das Pressgerät selbst ist nicht mit dargestellt und kann bei der Abstimmung eines Einsetzraums auf die Muffelaufnahme MA in an sich gebräuchlicher Art ausgeführt sein.

Fig. 4 zeigt einen Schnitt durch die in Fig. 3 dargestellte Vorrichtung nach Einfüllen und Aushärten von Füllmaterial FM in den Zwischenraum zwischen Muffel und Innenwand des Aufnahmeraums. Der bezüglich der Mittelachse AM radial zwischen Muffel MU und Innenwand IW liegende Zwischenraum ist vollständig mit ausgehärtetem Füllmaterial FM ausgefüllt, so dass die Muffel quer zur Mittelachse AM stabil gegen den beim Pressvorgang in den Hohlräumen FH auftretenden Druck des in die Hohlräume FH eingepressten Prothesenmaterials abgestützt ist und eine Beschädigung der Muffel in diesem Stadium weitgehend ausgeschlossen ist. die Muffelaufnahme ist vorzugsweise metallisch und kann insbesondere aus Stahl bestehen. Das Füllmaterial legt sich unter Ausfüllung auch von Unregelmäßigkeiten der Außenseite der Muffel flächig an diese an, so dass punktuelle Kraftspitzen zuverlässig vermieden werden.

Das gemäß der Darstellung nach Fig. 3 in fließfähiger Form in den Zwischenraum eingefüllte Füllmaterial FM ist vorzugsweise ein unter Volumenexpansion aushärtendes Material, insbesondere Gips, wobei die Volumenexpansion beim Aushärtevorgang bewirkt, dass eventuell in der Einbettmasse EM der Muffel MU bereits vorhandene Risse in der Außenfläche der Muffel durch das Füllmaterial FM zumindest teilweise wieder ausgefüllt werden und/oder dass das Füllmaterial FM nach der Aushärtung eine innere Druckspannung aufweist, welche besonders vorteilhaft zur Abstützung gegen den Pressdruck während des Pressvorgangs ist.

Wie aus der Schnittdarstellung nach Fig. 4 ersichtlich ist, ist der Boden des topfförmigen Aufnahmeraums nach unten durch eine Bodenplatte BP abgeschlossen, welche vorteilhafterweise über Schrägflächen an einer Bodenöffnung BO der Muffelaufnahme abgestützt und in Richtung des Aufnahmeraums bzw. der Muffel aus der Bodenöffnung BO abhebbar ist, um die Muffel samt dem erhärteten Füllmaterial FM nach Abschluss des Pressvorgangs aus dem Aufnahmeraum AR der Muffelaufnahme MA zu entformen. Die zumindest annähernd einem Kegelstumpf entsprechende Form des Aufnahmeraums besitzt bei der Bodenplatte BP bezüglich der Mittelachse AM radial gerichtete Abmessungen, welche nur um ein geringes Maß größer sind als der Durchmesser DM der auf der Bodenplatte BP abgestützten Muffel MU, so dass allein durch diese annähernde Gleichheit von Querabmessungen eine mittige Ausrichtung der Muffel im Aufnahmeraum weitgehend gewährleistet ist. Für eine Zentrierung der Muffel können auch Strukturen zwischen Bodenplatte BP und der dieser zuweisenden Seite der Muffel vorgesehen sein, indem beispielsweise die Bodenplatte BP in der Mitte eine Vertiefung aufweist, in welche ein achsnaher Fortsatz der Muffel eingreift. Ein solcher Fortsatz kann beispielsweise als Materialstumpf in einer Befüllöffnung der in Fig. 1 dargestellten Muffelform entstehen.

Durch die sich nach oben erweiternde Querabmessung des Aufnahmeraums nimmt die radiale Weite des Zwischenraums zwischen Muffel und Innenwand IW des Aufnahmeraums nach oben zu. Eine mittlere radiale Breite des Zwischenraums ist in Fig. 4 auf etwa halber axialer Höhe des Füllmaterials FM mit RF bezeichnet. Eine solche mittlere radiale Breite beträgt vorteilhafterweise wenigstens 5 % und vorteilhafterweise höchstens 25 % des Durchmessers DA der Kegelstumpfform des Aufnahmeraums an der Höhenposition der mittleren radialen Weite RF des Zwischenraums.

Die Muffel MU kann auch von vorn herein durch eine von Fig. 1 abweichende Gestaltung der Manschette MA der Muffelform eine dem Aufnahmeraum AR der Muffelaufnahme angenäherte Kegelstumpfform besitzen, wodurch die radiale Weite des Zwischenraums zwischen Muffel und Innenwand IW weniger variiert.

Nach Aushärten des Füllmaterials FM in dem Zwischenraum wird die in Fig. 4 als Schnittbild dargestellte Anordnung in ein Pressgerät eingesetzt und über den Adapterkanal AK des Pressgerät-Adapters PA und den Presskanal PK der Muffel MU wird Prothesenmaterial in die Hohlräume FH, welche Negativformen der herzustellenden zahnprothetischen Formkörper bilden, eingepresst. Als Prothesenmaterial kann insbesondere ein thermoplastischer Kunststoff vorgesehen sein, welcher zuvor im Pressgerät durch Erwärmung in einen hinreichend fließfähigen Zustand gebracht wird. Pressgeräte zur Durchführung solcher Pressvorgänge sind an sich bekannt und gebräuchlich. Anstelle von thermoplastischem Kunststoff als Prothesenmaterial können auch andere, fließfähig einbringbare und in den Hohlräumen FH aushärtende Prothesenmaterialien zum Einsatz kommen.

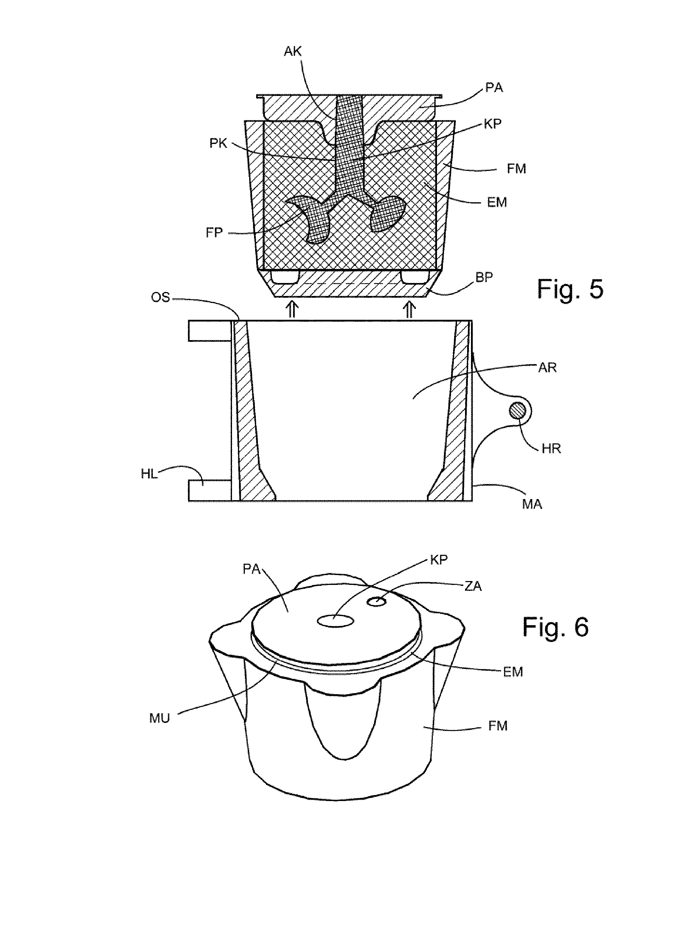

Nach Aushärtung des Prothesenmaterials in der Muffel und Entnahme der in Fig. 4 dargestellten Anordnung aus dem Pressgerät kann vorteilhafterweise wie in Fig. 5 dargestellt, die Muffel MU samt dem diese umschließenden Füllmaterial FM aus dem Aufnahmeraum entformt werden, indem durch Druck auf die Bodenplatte BP diese samt Muffel und Füllmaterial aus dem Aufnahmeraum entfernt wird. Fig. 6 zeigt einen entformten, die Muffel MU und das diese umschließende Füllmaterial FM enthaltenden, aus der Muffelaufnahme entformten Körper in Schrägansicht. Der Adapter PA ist bei der Entformung über das in dem Kanal PK, AK enthaltene Prothesenmaterial noch mit der Muffel verbunden.

Füllmaterial FM und Einbettmaterial EM können auf bekannte Weise, insbesondere durch abrasive Verfahren, wie beispielsweise Sandstrahlen, entfernt werden, so dass das Prothesenmaterial in Form eines Stumpfes PK und an diesem über stiftförmige Verbindungen gehaltenen zahnprothetischen Formkörpern FP freigelegt wird. Die Formkörper FP werden von den Stiften getrennt und legen damit in zu den zuvor angefertigten Wachsmodellen formgetreuer Ausführung vor.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Muffelsystem zur Herstellung von zahnprothetischen Formkörpern durch Einpressen von Prothesenmaterial in einen Hohlraum einer Muffel mit einer formstabilen Muffelaufnahme, welche mit einer Innenwand einen Aufnahmeraum für die Muffel ringförmig umgibt, wobei der Aufnahmeraum (AR) so ausgebildet ist, dass die Muffel (MU) unter Einhaltung eines die Muffel mehrseitig umgebenden Zwischenraums gegen die Innenwand in die Muffelaufnahme (MA) einsetzbar und der Zwischenraum mit einer fließfähigen, aushärtbaren Füllmasse (FM) ausfüllbar ist.

2. Muffelsystem nach Anspruch 1, **dadurch gekennzeichnet, dass** die Muffelaufnahme (MA) metallisch ist.

3. Muffelsystem nach Anspruch 1 oder 2, **dadurch gekennzeichnet, dass** der Aufnahmeraum (AR) topfförmig ausgebildet ist.

4. Muffelsystem nach Anspruch 3, **dadurch gekennzeichnet, dass** eine Bodenplatte (BP) lösbar in eine Bodenöffnung der Muffelaufnahme einsetzbar ist.

5. Muffelsystem nach einem der Ansprüche 1 bis 4, **dadurch gekennzeichnet, dass** (AR) der Aufnahmeraum sich in eine Richtung erweitert.

6. Muffelsystem nach einem der Ansprüche 1 bis 5, **dadurch gekennzeichnet, dass** der mittlere Abstand (RF) der Muffel von der Innenwand der Muffelaufnahme zwischen 5 % und 25 % des mittleren Durchmessers (DA) des Aufnahmeraums der Muffelaufnahme beträgt.

7. Muffelsystem nach einem der Ansprüche 1 bis 6, **dadurch gekennzeichnet, dass** der Zwischenraum (AR) durch mehrere Einfüllöffnungen (ER) erweitert ist.

8. Muffelsystem nach einem der Ansprüche 1 bis 8, **gekennzeichnet durch** ein Pressgerät mit einer Halterung, in welche die Muffelaufnahme in definierter Position einlegbar ist.

9. Muffelsystem nach einem der Ansprüche 1 bis 8, **gekennzeichnet durch** eine Muffelform mit einer Manschette, welche eine seitliche Außenkontur der Muffel auf ein gegenüber dem Aufnahmeraum (AR) der Muffelaufnahme (MA) um den Zwischenraum reduziertes Maß, insbesondere auf einen gegenüber dem Aufnahmeraum reduzierten Durchmesser (DM) der Muffel einstellt.

10. Verfahren zur Herstellung eines zahnprothetischen Formkörpers, bei welchem eine Muffel (MU) mit einem eine Negativform des Formkörpers bildenden Hohlraum (FH) erzeugt und mittels eines Pressgeräts formbares Prothesenmaterial in den Hohlraum gepresst wird, wobei die Außenseite der Muffel während des Pressvorgangs durch eine Stabilisierungseinrichtung abgestützt wird, **dadurch gekennzeichnet, dass** die Muffel in eine Muffelaufnahme (MA) eingesetzt wird, welche mehrseitig durch einen Zwischenraum von der Muffel beabstandet ist, dass der Zwischenraum mit einer fließfähigen Füllmasse (FM) ausgefüllt und die Füllmasse verfestigt wird, und dass danach die Muffelaufnahme mit der Muffel in das Pressgerät eingesetzt und Prothesenmaterial in den Hohlraum eingepresst wird.

11. Verfahren nach Anspruch 10, **dadurch gekennzeichnet, dass** als Füllmaterial ein expandierend aushärtendes Material verwendet wird.

12. Verfahren nach Anspruch 11, **dadurch gekennzeichnet, dass** als Füllmaterial Gips verwendet wird.
